Europäisches Patentamt

European Patent Office

Office européen des brevets

(19)

(11) Veröffentlichungsnummer: **0 059 402**
**B1**

(12)

# EUROPÄISCHE PATENTSCHRIFT

(45) Veröffentlichungstag der Patentschrift:
13.02.85

(51) Int. Cl.⁴: **H 02 K 15/12**

(21) Anmeldenummer: **82101310.9**

(22) Anmeldetag: **20.02.82**

(54) Verfahren zur Herstellung einer Spule oder einer Halbspule für eine elektrische Maschine.

(30) Priorität: **04.03.81 SE 8101400**

(43) Veröffentlichungstag der Anmeldung:
**08.09.82 Patentblatt 82/36**

(45) Bekanntmachung des Hinweises auf die Patenterteilung:
**13.02.85 Patentblatt 85/7**

(84) Benannte Vertragsstaaten:
**CH DE FR GB LI**

(56) Entgegenhaltungen:
**CH - A - 454 441**
**DE - A - 1 438 304**
**DE - A - 2 538 702**
**GB - A - 1 061 802**

(73) Patentinhaber: **ASEA AB, S-721 83 Västeras (SE)**

(72) Erfinder: **Lövgren, Göran, Bruksgatan 11 B,**
**S-730 50 Skultuna (SE)**
Erfinder: **Rothman, Bengt, Dipl.Ing.,**
**Krongjutarvägen 1 G, S-730 50 Skultuna (SE)**

(74) Vertreter: **Boecker, Joachim, Dr.-Ing.,**
**Rathenauplatz 2-8, D-6000 Frankfurt a.M. 1 (DE)**

**Beschreibung**

Die Erfindung betrifft ein Verfahren zur Herstellung einer Spule oder einer Halbspule für eine elektrische Maschine gemäß dem Oberbegriff des Anspruches 1. Das Leiterbündel kann dabei entweder aus Windungen eines einzigen isolierten Leiters bestehen oder aus mehreren separaten isolierten Leitern, sogenannten Teilleitern, die an ihren Enden elektrisch miteinander verbunden sind, und zwar normalerweise in Parallelschaltung miteinander.

Das Leiterbündel wird zu seiner Isolierung gegenüber den Wänden der Maschinennut, die auf Erdpotential liegen, mit einer Isolierung (Spulenisolierung oder Nutisolierung) umgeben. Für diese Isolierung wird gewöhnlich ein Material verwendet, das gegen Glimmen widerstandsfähig ist, z. B. Glimmer oder Silikongummi. Beim Aufbringen dieser Isolierung um das Leiterbündel findet eine Imprägnierung und ein Pressen statt, um Hohlräume in der Isolierung zu verhindern und ein dichtes Umschließen des Leiterbündels durch die Isolierung zu erreichen.

Aus der GB-PS 867 763 ist ein Verfahren zur Herstellung von Spulen für elektrische Maschinen bekannt, bei welchem die Spulenseite ihre endgültige Form unter Anwendung einer aus zwei L-förmigen Teilen bestehenden zusammendrückbaren Form und eines um die Form angebrachten Schrumpfbandes erhält. Das Schrumpfband drückt die L-förmigen Teile bei der Erwärmung derart zusammen, daß diese aneinander anliegen und dabei einen geschlossenen Formraum mit rechteckigem Querschnitt bilden. Bei der Anwendung eines härtbaren Imprägnierharzes wird dieses dem um das Leiterbündel anzubringenden Isoliermaterial zugegeben, bevor das Isoliermaterial um das Leiterbündel angebracht wird, d. h., bevor das Leiterbündel in der Form angeordnet wird. Das Imprägnierharz wird nach dem Zusammendrücken der Form und nach Evakuierung der Form mit ihrem Inhalt mit Hilfe eines erhitzten flüssigen Druckmittels, wie z. B. Asphalt, das um die Form und das Schrumpfband angebracht wird, ausgehärtet. Dadurch, daß das Schrumpfband als dichte Bandage aufgebracht wird, kann das Druckmittel nicht in die Isolierung eindringen. Bei der Anwendung eines thermoplastischen Imprägnierharzes wird das Isoliermaterial in nichtimprägniertem Zustand um das Leiterbündel angebracht. Nach dem Zusammendrücken der Form in der oben beschriebenen Weise und nach ihrer Evakuierung wird das Imprägnierharz in diesem Fall um die Form und das Schrumpfband angebracht, und die Imprägnierung geschieht, während das Imprägnierharz unter Druck gehalten wird.

Bei dem genannten bekannten Verfahren geben die innerhalb des Schrumpfbandes liegenden Formteile der Spulenseite ihre endgültige Form. Dies bedeutet, daß hohe Anforderungen an die Maßhaltigkeit der Formteile gestellt werden müssen. Diese müssen daher aus einem solchen Material und in solchen Dicken hergestellt werden, daß sie verhältnismäßig teuer werden, so daß sie aus Kostengründen wiederverwendet werden müssen. Das bedeutet, daß zusätzliche Verfahrensschritte zur Reinigung der Formteile erforderlich sind. Da die Formteile im zusammengedrückten Zustand einen geschlossenen Formraum bilden, bilden sie einen erheblichen Widerstand gegen ein Imprägnierharz, das dem Leiterbündel und dessen Isolierung nach dem Zusammendrücken der Form zugeführt wird. Dasselbe gilt für die dichte Bandage des Schrumpfverbandes.

Der Erfindung liegt die Aufgabe zugrunde, ein Verfahren der eingangs genannten Art zu entwickeln, das von den genannten Nachteilen des bekannten Verfahrens frei ist.

Zur Lösung dieser Aufgabe wird ein Verfahren nach dem Oberbegriff des Anspruches 1 vorgeschlagen, welches erfindungsgemäß die im kennzeichnenden Teil des Anspruches 1 genannten Merkmale hat.

Eine vorteilhafte Weiterbildung des Verfahrens ist in dem Unteranspruch genannt.

Gemäß der Erfindung erhält die Spulenseite der Spule unter Anwendung eines Werkzeugs ihre endgültige Form. Dadurch können einfache Formteile, wie z. B. abgewinkelte Bleche, innerhalb des schrumpfenden Materiales benutzt werden, und zwischen den Formteilen können in Längsrichtung verlaufende Spalte vorgesehen werden, wodurch der Zugang von Imprägnierharz zur Isolierung der Spulenseite, wenn sich diese in der Form befindet, sehr erleichtert wird. Ferner wird ein für das Imprägnierharz durchlässiges Material als schrumpfbares Material verwendet.

Als schrumpfbares Material können vorzugsweise u. a. gewebte Bänder oder Bögen aus Polymerfasern, wie Fasern aus Polyäthylenglykolterephthalat, Polyamid, Polyakrylnitril, Polyvinylidenchlorid und Polypropylen verwendet werden. Man kann auch Filme aus den genannten Polymeren verwenden, wenn die Filme mit gegenseitigem Abstand zwischen nebeneinander liegenden Windungen des Films angebracht werden (also nicht überlappt), oder wenn sie perforiert werden, um das Imprägnierharz hindurchlassen zu können.

Anhand der Figuren soll die Erfindung näher erläutert werden. Es zeigt

Fig. 1 eine gemäß dem Verfahren nach der Erfindung hergestellte mit festem Isoliermaterial umwickelte Halbspule von oben gesehen,

Fig. 2 eine andere nach dem Verfahren gemäß der Erfindung hergestellte mit festem Isoliermaterial umwickelte Spule von oben gesehen,

Fig. 3 im Querschnitt eine in einem Werkzeug angeordnete Spulenseite einer Spule nach den Fig. 1 und 2.

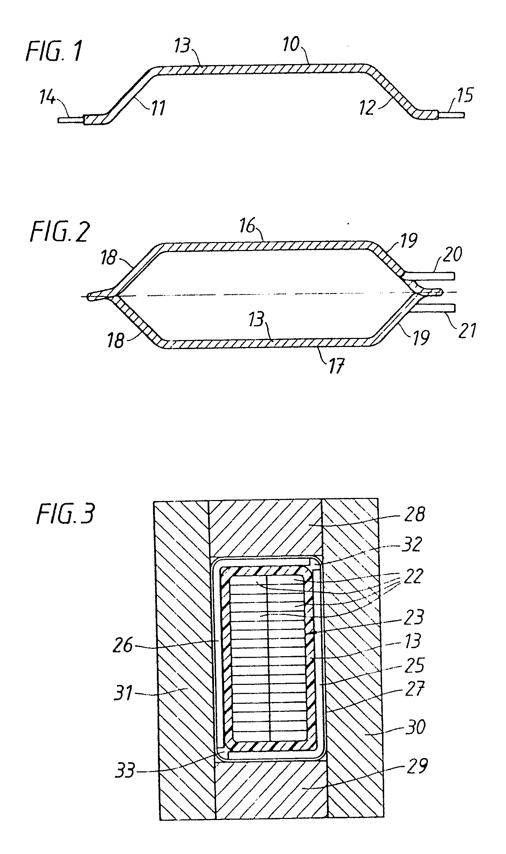

Fig. 1 zeigt eine Halbspule mit einer Spulenseite 10, die in einer Nut einer elektrischen Maschine plaziert wird, sowie Wicklungsköpfe 11 und 12, die außerhalb der Nuten liegen. Die Halbspule ist mit einer festen Spulenisolation versehen, die aus einer Umwicklung 13 aus Glimmerband besteht. Die Anschlüsse der Spule sind mit 14 und 15 bezeichnet.

Fig. 2 zeigt eine Spule mit zwei geraden Spulenseiten 16 und 17, die in Nuten einer elektrischen Maschine plaziert werden, sowie gebogenen Wicklungsköpfen 18 und 19, die außerhalb der Nuten liegen. Die Spule ist mit einer festen Spulenisolation versehen, die auch in diesem Fall aus einer Umwicklung 13 aus Glimmerband besteht. Die Anschlüsse der Spule sind mit 20 und 21 bezeichnet.

Die Spulen nach den Fig. 1 und 2 werden durch Biegung eines Leiters hergestellt, so daß die fertig gebogene Spule mehrere Windungen 22 enthält, die pro Spulenseite in einer Nut in zwei Stapeln nebeneinander liegen, so wie es Fig. 3 zeigt. Die nebeneinanderliegenden Windungen des Leiters bilden das Leiterbündel 23 der Spule. Die Leiter des Leiterbündels sind auf übliche Weise durch eine nicht dargestellte Leiterisolierung gegeneinander isoliert, die z. B. aus einer Umspinnung des Leiters mit Glasgarn bestehen kann, das mit einem Bindemittel, wie z. B. einem Epoxyharz, imprägniert ist. Wie bereits erwähnt, ist das Leiterbündel mit einer umgebenden Isolierung 13 versehen, die aus einer Umwicklung eines Glimmerbandes besteht. Das Glimmerband kann aus einer selbsttragenden Schicht von einander überlappenden kleinen Glimmerschuppen bestehen, die an einem Glasgewebeband mit einem dünnen Film von Polyäthylenglykolterephtalat fixiert sind. Ein solches Glimmerband wird in der DE-PS 1 199 348 beschrieben. Um jede Spulenseite des mit Isolierung versehenen Leiterbündels werden in Längsrichtung des Bündels zwei L-förmige Stücke 25 und 26 aus Stahlblech angebracht. Um diese Stücke wird ein Band 27 gewickelt, das aus Fasern aus Polyäthylenglykolterephthalat gewebt ist, welches die Fähigkeit hat, bei Erwärmung zu schrumpfen.

Das derart zusammengesetzte Produkt wird mit der Spulenseite in einem Werkzeug in einer Heißpresse angeordnet. Das Werkzeug umfaßt zwei zueinander parallele Leisten 28 und 29 sowie zwei weitere zu den erstgenannten senkrecht und zueinander parallel verlaufende Leisten 30 und 31.

Das zusammengesetzte Produkt wird bei ca. 175° C einige Minuten im Werkzeug gehalten und zusammengepreßt, so daß die Leisten 28 und 29 an den Leisten 30 und 31 anliegen. Dabei schrumpft das Schrumpfband und zieht sich um das Produkt zusammen, so daß das Produkt beim Herausnehmen aus dem Werkzeug seine Form beibehält. Die L-förmigen Stücke 25 und 26 bilden in dem zusammengedrückten Produkt zusammen einen Formraum, der dieselben Abmessungen wie die Spulenseite der fertigen Spule hat, doch ist die Form offen, da die L-förmigen Stücke miteinander Spalte 32 und 33 bilden.

Nach dem Herausnehmen des zusammengedrückten Produktes aus dem Werkzeug wird es in einen Imprägnierungsbehälter gebracht. Dabei wird es zuerst bei einem Druck von 0,1 mm Hg und bei einer Temperatur von 40° C getrocknet, worauf ein Imprägnierharz bei dem genannten Druck zugeführt wird. Wenn alles Imprägnierharz zugeführt ist, wird der Druck auf ca. 2500 kPa erhöht. Bei dem Imprägnierharz kann es sich um ein Epoxyharz handeln, das aus 85 Teilen »Araldit F«, 100 Teilen »Härter 905« (beide von Ciba AG, Schweiz) und 15 Teilen Phenylglycidyläther besteht. Nach der Imprägnierung wird das imprägnierte Produkt im Ofen bei 160° C 6 bis 8 Stunden lang gehärtet. Nach der Entfernung des Schrumpfbandes und der L-förmigen Stücke 25 und 26 von dem gehärteten Produkt wird die hergestellte Spule mit den geraden Spulenseiten in die Nuten einer Maschine eingelegt, während die gleichzeitig mit den Spulenseiten imprägnierten und gehärteten Wicklungsköpfe außerhalb der Nuten liegen. Die Stücke 25 und 26 können fortgeworfen werden, da sie normalerweise billig sind.

Statt des beschriebenen Glimmerbandes kann anderes festes Isoliermaterial, wie z. B. Glimmerband mit großen Glimmerschuppen, um das Leiterbündel angebracht werden. Statt des beschriebenen Imprägnierharzes können andere im Handel erhältliche, vollständig polymerisierbare Harze sowie andere Epoxyharze und Polyesterharze verwendet werden.

**Patentansprüche**

1. Verfahren zur Herstellung einer Spule oder einer Halbspule, die in Nuten eines Stators oder eines Rotors einer elektrischen Maschine eingelegt wird, insbesondere eine Hochspannungsspule, die wenigstens eine Spulenseite (10, 16, 17) umfaßt, wobei ein mit Isolierung (13) umgebenes, aus einzelnen Leitern (22) zusammengesetztes Leiterbündel (23) mit einem für die Spulenseite vorgesehenen Teil des Leiterbündels in einer zusammendrückbaren, aus mindestens zwei Teilen (25, 26) bestehenden Form angeordnet wird, die Form mit einem in Wärme schrumpfbaren Material (27) umgeben wird, das so zusammengesetzte Produkt derart erhitzt wird, daß das schrumpfbare Material schrumpft, das zusammengesetzte Produkt danach in Imprägnierharz zur Imprägnierung der Isolierung gebracht wird und das Imprägnierharz in eine feste Form in der Isolierung übergeführt wird, dadurch gekennzeichnet, daß als schrumpfbares Material ein für das Imprägnierharz durchlässiges Material verwendet wird, daß das zusammengesetzte Produkt in einem Werkzeug (28—31), welches zusammen mit der Form (25—26) der Spulenseite ihre endgültige Form gibt, derart erwärmt wird, daß das schrumpfbare Material schrumpft, daß Teile der Form während des gesamten Vorganges in Längsrichtung verlaufende Spalte (32, 33) zwischen sich bilden, daß das geschrumpfte Material die endgültige Form der Spulenseite nach dem Herausnehmen des zusammengesetzten Produktes aus dem Werkzeug aufrechterhält und daß das Produkt anschließend imprägniert wird.

2. Verfahren nach Anspruch 1, dadurch gekennzeichnet, daß als schrumpfbares Material ein gewebtes Produkt aus Polymerfasern verwendet wird.

## Claims

1. Method of manufacturing of a coil or one half of a coil intended to be arranged in the slots of a stator or a rotor of an electric machine, particularly a coil for high voltages, comprising at least one side portion of a coil (10, 16, 17), whereby a bundle (23) of individuel conductors (22) and insulating material (13) surrounding said bundle are placed with a portion destined to form the side part (slot portion) of the coil into a compressible mould consisting of at least two parts (25, 26), the mould being surrounded by a heat-shrinkable material (27), said assembled product being heated so, that the shrinkable material is shrinking, whereafter the assembled product is put into impregnating resin for impregnating the insulating material and the impregnating resin is transformed into a solid state in the insulating material, characterized in that a shrinkable material is used, which is penetrable by said impregnating resin, that said assembled product is heated in a toole (28—31), which together with the mould (25—26) gives the side part of the coil its final shape, to such an extent that the shrinkable material shrinks, that parts of the mould form between themselves longitudinal gaps (32, 33) during the entire process, and that the shrunk material maintains the final shape of the side part of the coil after the removal of the assembled product from the tool, and that the product is then being impregnated.

2. Method according to claim 1, characterized in that said shrinkable material consists of a woven product of polymer fibers.

## Revendications

1. Procédé de fabrication d'une bobine ou d'une demi-bobine pour une machine électrique, qui est introduite dans les encoches d'un stator ou d'un rotor d'une machine électrique, en particulier d'une bobine haute tension, qui comporte au moins un côté de bobine (10, 16, 17), du genre dans lequel un faisceau de conducteurs (23) entouré d'un isolant (13) et constitué par des conducteurs individuels (22), est disposé, avec une partie du faisceau de conducteurs, qui est prévue pour constituer le côté de la bobine, dans un moule compressible et constitué par deux éléments (25, 26), dans lequel le moule est entouré avec un matériau (27) thermo-rétractable, dans lequel le produit ainsi composé est chauffé au point que ledit matériau se rétracte, dans lequel le produit ainsi composé est introduit dans une résine d'imprégnation pour l'imprégnation de l'isolant, la résine d'imprégnation étant alors amenée dans une forme solide dans l'isolant, caractérisé par le fait qu'au titre de matériau rétractable, on utilise un matériau perméable pour la résine d'imprégnation, que le produit assemblé est chauffé, dans un outil (28—31) qui confére, conjointement avec le moule (25—26), au côté de la bobine sa forme définitive, de telle manière que le matériau rétractable se rétracte, que des parties du moule forment entre elles, pendant la totalité du processus, des fentes (32, 33) qui s'étendent dans le sens longitudinal, que le matériau rétracté maintient la forme définitive du côté des bobines après extraction du produit composé de l'outil, et que le produit est ensuite imprégné.

2. Procédé selon la revendication 1, caractérisé par le fait que l'on utilise, comme matériau rétractable, un produit tissé avec des fibres d'un polymère.

FIG. 1

FIG. 2

FIG. 3